Europäisches Patentamt

European Patent Office

Office européen des brevets

(19)

(11) Veröffentlichungsnummer: **0 063 319**
**B1**

(12) # EUROPÄISCHE PATENTSCHRIFT

(45) Veröffentlichungstag der Patentschrift:
**13.02.85**

(21) Anmeldenummer: **82103011.1**

(22) Anmeldetag: **08.04.82**

(51) Int. Cl.⁴: **C 14 C 3/20,** C 14 C 3/28,
C 08 G 12/40

(54) **Verfahren zur Herstellung von wasserlöslichen oder selbstdispergierenden Harzgerbstoffen für die Nachgerbung von Leder und ihre Verwendung.**

(30) Priorität: **18.04.81 DE 3115646**

(43) Veröffentlichungstag der Anmeldung:
**27.10.82 Patentblatt 82/43**

(45) Bekanntmachung des Hinweises auf die Patenterteilung:
**13.02.85 Patentblatt 85/7**

(84) Benannte Vertragsstaaten:
**AT BE CH DE FR GB IT LI NL SE**

(56) Entgegenhaltungen:
**DE - B - 1 050 542**
**DE - B - 1 720 270**
**GB - A - 595 368**
**GB - A - 628 818**
**US - A - 3 063 781**

(73) Patentinhaber: **BASF Aktiengesellschaft,**
**Carl-Bosch-Strasse 38, D-6700 Ludwigshafen (DE)**

(72) Erfinder: **Lach, Dietrich, Dr., Gartenweg 16,**
**D-6701 Friedelsheim (DE)**
Erfinder: **Streicher, Rolf, Rudolf-Heilgers-Strasse 8,**
**D-6250 Worms (DE)**
Erfinder: **Bolz, Gerhard, Dr., Auf der Hoehe 10,**
**D-6710 Frankenthal (DE)**

0 063 319

## Beschreibung

Handelsübliche Harzgerbstoffe bestehen gewöhnlich aus nicht vollständig wasserlöslichen Kondensaten von aliphatischen Aldehyden und einer oder mehreren Verbindungen aus der Gruppe Harnstoff, Dicyandiamid, Melamin und Guanidin. Sie werden in der Nachgerbung von (vorzugsweise chromgegerbten) Ledern eingesetzt. Sie enthalten Dispergiermittel, um die unlöslichen Anteile so fein zu dispergieren, daß sie weitgehend auf das Leder aufziehen. Es besteht die Vorstellung, daß die dispergierten unlöslichen Anteile insbesondere die locker strukturierten Partien der gegerbten Haut füllen und damit deren Festnarbigkeit und Schleifbarkeit verbessern. Nachteilig bei einigen bekannten Handelsprodukten ist vor allem, daß sie bei der Verarbeitung freien Formaldehyd abspalten, was eine Belästigung und gesundheitliche Gefährdung des Personals bedeutet. Ein weiterer Nachteil ist, daß sie meist relativ hohe Mengen nicht dispergierbarer unlöslicher Anteile enthalten, so daß sie nur zu etwa 70 bis 80% auf das Leder aufziehen. Ein Nachteil dieser Produkte, die nicht dispergierbare Anteile enthalten, ist ferner, daß diese grobteiligen Partikeln bei trockenem Walken sich aus dem Fasergeflecht des Leders wieder ablösen und zu einer Verschmutzung der Lederoberfläche führen können. Zu erwähnen ist auch, daß die bekannten Produkte die locker strukturierten Partien der Haut zwar gut füllen, aber dort in aller Regel zu einer Verhärtung des Leders führen, ferner, daß die Dispersionen einiger Produkte bei niedrigem pH-Wert instabil sind. Außerdem führen die handelsüblichen Produkte zu Ledern mit mehr oder weniger grobem Narbenbild. Schließlich erreichen einige Handelsprodukte ihre optimale Wirksamkeit nur bei etwa 60°C, also in der Nähe von Temperaturen, die bereits zu einer gewissen Schrumpfung des Leders führen können.

Aus der Literatur (z. B. US-A-3 852 471 und DE-A-1 670 178) ist die Herstellung anionischer Harzgerbstoffe auf Melaminbasis bekannt. Sie haben sich in der Praxis nicht eingeführt, hauptsächlich weil die zur Herstellung der Produkte erforderlichen äußerst kurzen Reaktionszeiten technisch nur mit großem Aufwand realisierbar sind. In der US-A-3 023 073 wird eine Kombination aus anionischen und kationischen Harzgerbstoffen empfohlen. Das Verfahren ist umständlich und hat sich in der Praxis nicht durchgesetzt.

In der US-A-3 063 781 werden Kondensationsprodukte aus Melamin, Dicyandiamid, Formaldehyd, Bisulfit und Harnstoff als Gerbstoffe beschrieben. Dabei wird ausdrücklich in Spalte 3, Z. 38 ff., hervorgehoben, daß ein Kondensationsprodukt ohne Dicyandiamid Produkte mit unbefriedigenden Eigenschaften ergibt.

In der GB-A-595 368 wird in allgemeiner Form ein Formaldehyd-Melamin-Harnstoff-Bisulfit-Kondensat zur Entfernung von Kationen aus Flüssigkeiten beschrieben. Die erfindungsgemäße spezielle Zusammensetzung und Anwendung für die Nachgerbung von Leder läßt sich aus dieser Literatur nicht entnehmen.

Der Erfindung lag daher die Aufgabe zugrunde, einen Harzgerbstoff ohne die genannten Nachteile zu entwickeln.

Die Lösung der Aufgabe und der Gegenstand der Erfindung wird in den Patentansprüchen definiert.

Die gemäß dieser Erfindung hergestellten Harzgerbstoffe, Kondensationsprodukte aus Formaldehyd, Harnstoff, Melamin und einem wasserlöslichen Salz der schwefligen Säure, beispielsweise dem Sulfit oder Bisulfit des Natriums, Kaliums, Ammoniums, Hydroxyethylammoniums, vorzugsweise Natriumhydrogensulfit, weisen ebenfalls die obengenannte selektive Füllwirkung für die locker strukturierten Lederpartien auf, obwohl sie durch den Gehalt an Sulfonsäuregruppen wesentlich besser wasserlöslich und feinteiliger als die üblichen Harzgerbstoffe sind. Sie sind, soweit sie nicht echt wasserlöslich sind, selbstdispergierend, bedürfen also keines Zusatzes eines Dispergiermittels. Allerdings können sie ohne weiteres auch zusammen mit den bekannten handelsüblichen anionischen Dispergiermitteln eingesetzt werden.

Weitere Vorteile der erfindungsgemäß erhältlichen Harzgerbstoffe sind, daß sie

1.  praktisch keinen freien Formaldehyd enthalten,
2.  sich praktisch vollständig an die Lederfaser binden und auch durch trockenes Walken nicht wieder abzulösen sind,
3.  eine gute Lichtechtheit besitzen,
4.  sehr feinnarbige Leder liefern,
5.  zu gut schleifbaren Ledern führen,
6.  Leder liefern, deren Weichheit auch in den locker strukturierten Partien ausgezeichnet ist,
7.  mit den üblicherweise in der Nachgerbflotte eingesetzten synthetischen Gerbstoffen, Fettungsmitteln, Farbstoffen und Säuren verträglich sind, also nicht ausfallen,
8.  bei allen für die Nachgerbung von Leder üblichen Temperaturen (ca. 20 bis 60°C) einsetzbar sind.

Das erfindungsgemäße Verfahren liefert besonders wertvolle Produkte, wenn man zuerst ein Vorkondensat aus Formaldehyd, Harnstoff und Melamin herstellt oder von einem Kondensationsprodukt aus Formaldehyd, Harnstoff und Melamin ausgeht und dieses mit Bisulfit und gegebenenfalls weiterem Formaldehyd umsetzt. Man kann in dieser Stufe zusammen mit dem Formaldehyd ggf. Harnstoff und/oder Melamin zusetzen.

2

# 0 063 319

## Beispiel 4

92 Teile der Komponente 1 wurden in 50 Teilen Wasser mit 57 Teilen Natriumhydrogensulfit und 30 Teilen Harnstoff 2 Stunden bei 60°C gerührt, anschließend wurden 50 Teile 30%iger Formaldehydlösung zugetropft und nochmals 65 Teile Wasser zugegeben. Schließlich wurde 1 Stunden bei 80°C gerührt und danach die erhaltene Lösung sprühgetrocknet. 100 Teile feuchtes Chromleder wurden mit 4 Teilen des erhaltenen Harzgerbstoffpulvers nachgegerbt. Man erhielt ein weiches, gut gefülltes, feinnarbiges Leder.

## Patentansprüche

1. Verfahren zur Herstellung von wasserlöslichen oder selbstdispergierenden Harzgerbstoffen für die Nachgerbung von Leder auf der Basis eines Kondensationsproduktes aus Melamin, Harnstoff, Formaldehyd und Hydrogensulfit, dadurch gekennzeichnet, daß man Formaldehyd, Harnstoff und Melamin oder ein Kondensationsprodukt aus Formaldehyd, Harnstoff und Melamin mit Natriumhydrogensulfit oder einer entsprechenden Menge eines anderen Salzes der schwefligen Säure und ggf. weiterem Formaldehyd ggf. unter Zusatz von weiterem Harnstoff und/oder Melamin in wäßriger Lösung bei einem pH-Wert zwischen 5 und 9, bei Temperaturen von 40 bis 120°C durch zwei bis zwölfstündiges Erhitzen umsetzt, wobei ein Gesamtverhältnis von

| | | |
|---|---|---|
| 5 bis 30 Gew.-% | Melamin, | |
| 15 bis 45 Gew.-% | Harnstoff, | |
| 20 bis 35 Gew.-% | Formaldehyd (berechnet wasserfrei) und | |
| 15 bis 55 Gew.-% | Natriumhydrogensulfit oder einer entsprechenden Menge eines anderen Salzes der schwefligen Säure | |

eingehalten wird.

2. Verfahren nach Anspruch 1, dadurch gekennzeichnet, daß ein Gesamtverhältnis von

| | | |
|---|---|---|
| 5 bis 20 Gew.-% | Melamin, | |
| 20 bis 40 Gew.-% | Harnstoff, | |
| 25 bis 30 Gew.-% | Formaldehyd (berechnet wasserfrei) und | |
| 20 bis 40 Gew.-% | Natriumhydrogensulfit oder einer entsprechenden Menge eines anderen Salzes der schwefligen Säure | |

eingehalten wird.

3. Verfahren nach Anspruch 1 oder 2, dadurch gekennzeichnet, daß man die Umsetzung bei 60 bis 100°C und einem pH-Wert von 6 bis 8 durchführt.

4. Verfahren zum Nachgerben von Leder, dadurch gekennzeichnet, daß man die Nachgerbung in 50 bis 1000% Wasser, bezogen auf das Ledergewicht, mit 1 bis 20%, bezogen auf das Ledergewicht, eines Harzgerbstoffes nach den Ansprüchen 1 bis 3 bei 20 bis 60°C, einem pH-Wert von 3,8 bis 7 innerhalb von 30 bis 240 Minuten durchführt.

5. Verwendung eines Harzgerbstoffes nach den Ansprüchen 1 bis 3, bei der Nachgerbung von Leder in einer Menge von 1 bis 20%, bezogen auf das Ledergewicht.

## Claims

1. A process for the production of a water-soluble or self-dispersing resin tanning agent for the retanning of leather, based on a condensate of melamine, urea, formaldehyde and bisulfite, wherein formaldehyde, urea and melamine or a condensate of formaldehyde, urea and melamine are reacted with sodium bisulfite or a corresponding amount of another salt of sulfurous acid and, if desired, further formaldehyde, with or without the addition of further urea and/or melamine, in aqueous solution at a pH of from 5 to 9 by heating at a temperature of from 40 to 120°C for from 2 to 12 hours, overall proportions of

| | |
|---|---|
| 5 to 30% | by weight of melamine, |
| 15 to 45% | by weight of urea, |
| 20 to 35% | by weight of formaldehyde (calculated as anhydrous material), and |
| 15 to 55% | by weight of sodium bisulfite or a corresponding amount of another salt of sulfurous acid |

being used.

2. A process as claimed in claim 1, wherein there are used overall proportions of

| | | |
|---|---|---|
| 5 to 20% | by weight of melamine, | |
| 20 to 40% | by weight of urea, | |
| 25 to 30% | by weight of formaldehyde (calculated as anhydrous material), and | |
| 20 to 40% | by weight of sodium bisulfite or a corresponding amount of another salt of sulfurous acid. | |

3. A process as claimed in claim 1 or 2, wherein the reaction is carried out at from 60 to 100°C and a pH of from 6 to 8.

4. A process for retanning leather, wherein retanning is carried out in 50 to 1000%, based on the weight of the leather, of wa ᵤʳ, using 1 to 20%, based on the weight of the leather, of a resin tanning agent according to claims 1 to 3, at from 20 to 60°C and a pH of from 3.8 to 7 in the course of from 30 to 240 minutes.

5. The use of a resin tanning agent according to claims 1 to 3, in the retanning of leather, in an amount of from 1 to 20%, based on the weight of the leather.


## Revendications

1. Procédé de préparation de matières tannantes de résine, solubles dans l'eau ou auto-dispersives, pour le retannage du cuir, à base d'un produit de condensation de mélamine, urée, formaldéhyde et hydrogénosulfite, caractérisé par le fait qu'à des températures de 40 à 120°C, en chauffant pendant deux à douze heures, on fait réagir, en solution aqueuse, à un pH compris entre 5 et 9, du formaldéhyde, de l'urée et de la mélamine ou un produit de condensation de formaldéhyde, urée et mélamine, avec de l'hydrogénosulfite de sodium ou une quantité correspondante d'un autre sel de l'acide sulfureux, et éventuellement encore du formaldéhyde, éventuellement avec addition encore d'urée et/ou mélamine, en respectant des proportions de:

| | | |
|---|---|---|
| 5 à 30% | en poids mélamine, | |
| 15 à 45% | en poids urée, | |
| 20 à 35% | en poids formaldéhyde (calculée sec) et | |
| 15 à 55% | en poids hydrogénosulfite de sodium ou une quantité correspondante d'un autre sel de l'acide sulfureux. | |

2. Procédé selon la revendication 1, caractérisé par le fait que les proportions sont de:

| | | |
|---|---|---|
| 5 à 20% | en poids mélamine, | |
| 20 à 40% | en poids urée, | |
| 25 à 30% | en poids formaldéhyde (calculée sec) et | |
| 20 à 40% | en poids hydrogénosulfite de sodium ou une quantité correspondante d'un autre sel de l'acide sulfureux. | |

3. Procédé selon la revendication 1 ou 2, caractérisé par le fait que l'on effectue la réaction entre 60 et 100°C et à un pH de 6 à 8.

4. Procédé de retannage du cuir, caractérisé par le fait que l'on effectue le retannage, entre 20 et 60°C, à un pH de 3,8 à 7, en 30 à 240 minutes, dans 50 à 1000% d'eau, rapporté au poids de cuir derayé, avec 1 à 20%, rapporté au poids du cuir, d'une matière tannante selon les revendications 1 à 3.

5. Utilisation d'une matière tannante selon les revendications 1 à 3 pour le retannage de cuir, en une quantité de 1 à 20%, rapportée au poids du cuir.